# FASCICULE DE BREVET EUROPEEN

(11) **EP 1 460 331 B1**
(45) Date de publication et mention de la délivrance du brevet: **05.10.2005**
(21) Numéro de dépôt: 04290682.6
(22) Date de dépôt: 12.03.2004
(51) Int. Cl.: F17C 9/04

(54) **Alimentation en énergie d'un terminal gazier à partir d'un navire transportant du gaz liquéfié**
Energieversorgung eines Gasterminals durch ein Flüssiggas transportierendes Schiff
Energy supply of a gas terminal by a liquefied gas transporting vessel

(30) Priorité: 20.03.2003 FR 0303430
(43) Date de publication de la demande: 22.09.2004
(73) Titulaire: SNECMA, 75015 Paris (FR)
(72) Inventeur: Feger, Damien, 27200 Vernon (FR)
(74) Mandataire: Joly, Jean-Jacques

(56) Documents cités:
- WO-A-01/03793
- WO-A-99/47869
- DE-C- 539 478
- FR-A- 1 481 495
- FR-A- 2 722 760
- US-A- 2 903 860
- US-A1- 2002 073 619
- US-A1- 2002 174 662
- RIBESSE J ED - ASSOCIATION DES INGENIEURS ELECTRICIENS SORTIS DE L'INSTITUT MONTEFIORE: "Recuperation cycles of the cold energy contained in liquefied natural gas" JOURNEES INTERNATIONALES D'ETUDE DES CENTRALES ELECTRIQUES MODERNES. LIEGE, 26 - 30 OCTOBRE 1981, LIEGE, A.I.M, BE, vol. VOL. 2 SESSION 8, 26 octobre 1981 (1981-10-26), pages 3801-3808, XP002079414

## Description

### Domaine de l'invention

La présente invention se rapporte au domaine général du transfert d'un gaz liquéfié entre un navire et un terminal gazier et elle concerne plus particulièrement un procédé d'alimentation en énergie du terminal gazier à partir du navire et les moyens correspondants pour sa mise en oeuvre.

### Arrière-plan de l'invention

Il est connu de US 2002/0 174 662 A1, considéré comme document reflétant l'art antérieur le plus proche, d'effectuer le transfert d'un gaz naturel sous forme de vapeur ou de liquide par l'intermédiaire d'interfaces spécifiques entre un navire et un terminal gazier.

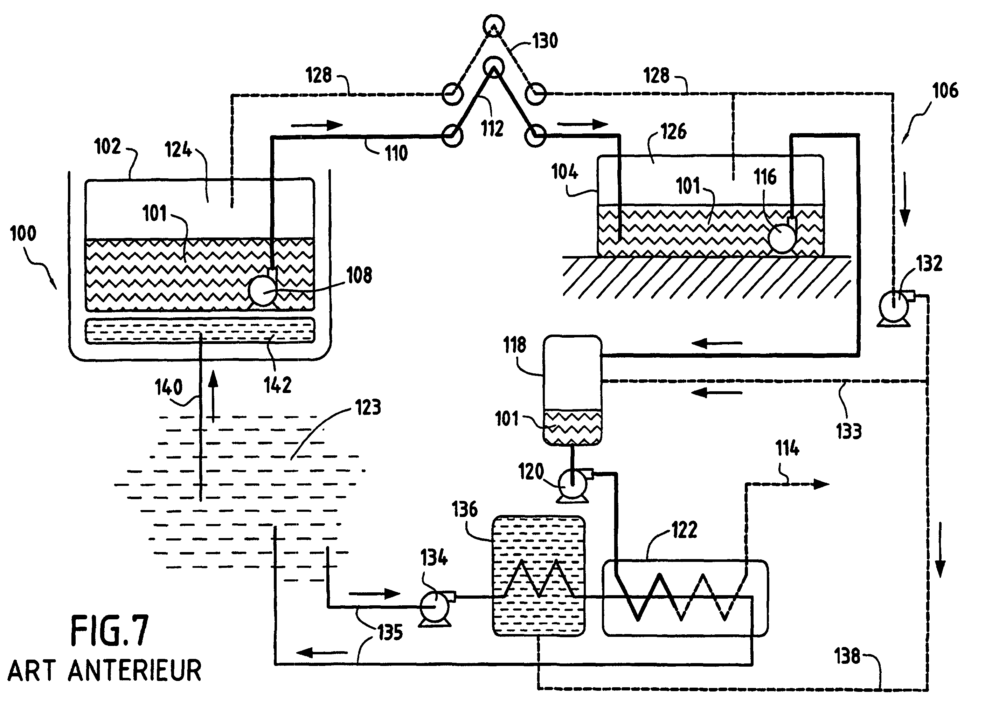

La figure 7 montre un schéma de principe simplifié d'un circuit de déchargement de gaz selon l'art antérieur.

Le gaz liquéfié 101 transporté dans une cuve 102 d'un navire 100 est déchargé vers un réservoir 104 d'un terminal gazier 106 par une pompe 108 immergée dans la cuve 102 du navire 100. Le gaz liquéfié est débité dans le réservoir 104 du terminal gazier au travers d'un circuit 110 comportant un bras de chargement 112 afin d'assurer une certaine liberté de mouvement entre le navire 100 et le terminal gazier 106.

Suivant les besoins d'alimentation d'un gazoduc 114 alimenté en gaz à haute pression, le gaz liquéfié 101 contenu dans le réservoir 104 du terminal gazier 106 est transféré, par une pompe 116 immergé dans ce réservoir 104, vers un condenseur 118. Ensuite, une pompe 120 haute pression débite ce gaz liquéfié 101 vers un échangeur thermique 122 afin qu'il soit re-gazéifié avant de l'envoyer, à une température sensiblement ambiante, vers le gazoduc 114.

En outre, le ciel gazeux 124 de la cuve 102 et le ciel gazeux 126 du réservoir 104 sont reliés entre eux par un circuit 128 de vapeurs de gaz naturel basse pression via un bras 130. Ceci permet d'assurer le contrôle de pression dans les ciels gazeux 124 et 126.

Des entrées thermiques dans la cuve 102 et le réservoir 104, provoquent une évaporation du gaz liquéfié engendrant des excès de vapeurs de gaz naturel. Une partie des excès de vapeurs peuvent être prélevés du circuit 128 par un compresseur 132 basse pression qui les envoie via un circuit 133 vers le condenseur 118, où ils sont à nouveau re-liquéfiés.

Par ailleurs, afin d'assurer la re-gazéification du gaz naturel liquéfié dans l'échangeur 122, de l'eau de mer 123 est prélevée par une pompe 134 via un circuit 135, et éventuellement réchauffée à l'aide de brûleurs immergés 136 alimentés par un circuit 138 de vapeur de gaz naturel, avant d'être renvoyée à la mer 123.

Cependant avec cette architecture de transfert, beaucoup de gaz est consommé en pure perte, ce qui provoque une dégradation écologique en plus d'un manque à gagner économique.

Pour résoudre ce genre de problèmes, il existe des terminaux gaziers comportant des installations de co-génération énergétique mais qui sont très coûteuses.

Enfin, durant le déchargement de sa cargaison le navire 100 prélève de l'eau de mer 123 par un circuit 140 pour remplir ses ballasts 142, afin d'assurer un tirant d'eau et une assiette convenable au navire 100.

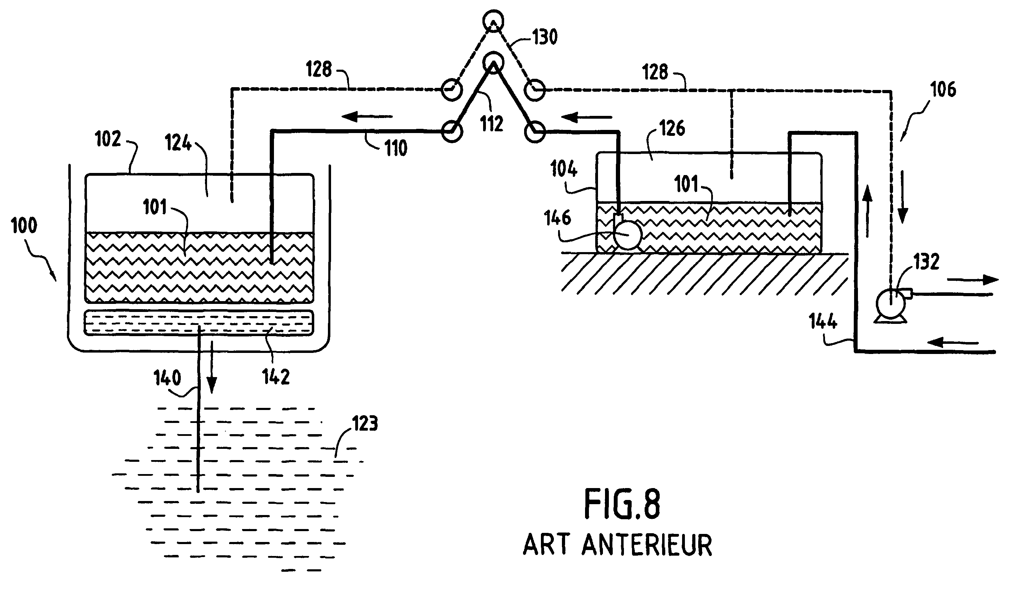

La figure 8 montre un schéma de principe simplifié d'un circuit de chargement de gaz liquéfié selon l'art antérieur. Selon cet exemple, le gaz liquéfié produit par une usine de liquéfaction, non représentée, est acheminé par un circuit 144 dans un réservoir de stockage 104 d'un terminal gazier 106 où il est prélevé par une pompe immergée 146 pour être envoyé via un circuit 110 vers une cuve 102 d'un navire 100.

De même, un compresseur 132 prélève d'un circuit 128 les excès de vapeurs de gaz naturel générés par les entrées thermiques et les envoie vers l'usine de liquéfaction.

Enfin, durant le chargement de sa cargaison, le navire 100, vide l'eau de mer initialement contenue dans ses ballasts 142, par un circuit 140 afin d'assurer un tirant d'eau et une assiette convenable du navire 100.

L'eau de mer utilisée dans les ballasts du navire ou dans les échangeurs thermiques assurant la re-gazéification du gaz naturel liquéfié au niveau du terminal gazier, engendre des corrosions dans ces ballasts et échangeurs thermiques.

En outre, l'eau de mer engendre un dépôt de limons dans les ballasts 142 qui entraîne ensuite des frais importants pour les éliminer.

### Objet et résumé de l'invention

La présente invention se propose donc de pallier les inconvénients précités en proposant un procédé de transfert d'un gaz liquéfié entre un navire et un terminal gazier qui optimise l'emploi des installations afin d'améliorer les performances économique et écologique.

Un autre but de l'invention est d'éviter la corrosion et les dépôts de limons dans les ballasts du navire.

Ces buts sont atteints grâce à un procédé d'alimentation en énergie d'un terminal gazier à partir d'un navire transportant du gaz liquéfié lors d'un transfert de ce gaz liquéfié entre une cuve du navire et un réservoir du terminal gazier, caractérisé en ce qu'une partie de l'énergie produite par le système propulsif du navire est fournie au terminal gazier.

Ainsi, il est tiré profit du système propulsif du navire qui est utilisé comme une unité de co-génération fournissant de l'énergie au terminal gazier, optimisant alors les performances économique et écologique. Cette solution est très économique car l'investissement nécessaire est déjà réalisé en grande partie au titre de la propulsion du navire lui-même et par conséquent, le terminal gazier n'a pas besoin d'avoir sa propre installation de co-génération.

Avantageusement, des excès de vapeurs de gaz dans le ciel gazeux de la cuve du navire et le ciel gazeux du réservoir du terminal gazier sont utilisés pour alimenter le système propulsif du navire.

Selon un aspect préféré de invention, la chaleur produite par le système propulsif du navire est utilisée pour alimenter au moins un échangeur thermique disposé dans le terminal gazier pour alimenter ce dernier en chaleur.

Un premier échangeur thermique peut être alimenté à partir d'un circuit de refroidissement du moteur du système propulsif du navire.

Un second échangeur thermique peut être alimenté à partir d'un circuit caloporteur au niveau des gaz échappements du moteur du système propulsif du navire.

Avantageusement, la chaleur dégagée par le premier échangeur thermique ou/et le second échangeur thermique est utilisée pour re-gazéifier le gaz liquéfié après avoir été déchargé de la cuve du navire vers un réservoir du terminal gazier.

Selon un aspect particulier de l'invention, au moins un cycle positif de récupération d'énergie est formé entre une source froide au niveau de la re-gazéification et une source chaude au niveau du premier échangeur thermique ou/et le second échangeur thermique.

Après sa re-gazéification, le gaz peut être réchauffé par un échangeur thermique supplémentaire.

Selon un autre aspect de l'invention, lors d'un déchargement du gaz liquéfié du navire vers le terminal gazier, des ballasts du navire sont remplis par de l'eau fournie par le terminal gazier.

L'eau fournie par le terminal gazier peut être une eau de mer décantée dans un bassin.

En variante, l'eau fournie par le terminal gazier peut être une eau douce stockée dans un bassin.

Avantageusement, la chaleur produite par le système propulsif du navire est utilisée pour chauffer l'eau dans le bassin afin que ce dernier puisse être utilisé comme un accumulateur thermique.

L'accumulateur thermique formé par le bassin d'eau peut être utilisé pour re-gazéifier le gaz liquéfié dans le terminal gazier.

Lors d'un chargement du gaz liquéfié du terminal gazier vers le navire, l'eau présente dans les ballasts du navire est envoyée vers le terminal gazier.

L'eau envoyée vers le terminal gazier, peut être utilisée dans un circuit de refroidissement dans le terminal gazier.

Selon encore un autre aspect de l'invention, une partie déterminée de la puissance électrique fournie par le système propulsif du navire est utilisée pour alimenter en électricité le terminal gazier.

Le gaz liquéfié peut être du gaz naturel liquéfié ou du gaz de pétrole liquéfié.

L'invention vise aussi un navire comportant une cuve pour le transport de gaz liquéfié, un système propulsif et un moyen de transfert de ce gaz liquéfié entre la cuve du navire et un réservoir d'un terminal gazier, caractérisé en ce qu'il comporte en outre au moins une interface d'alimentation en fluide caloporteur destiné à alimenter le terminal gazier en chaleur.

Une première interface d'alimentation en fluide caloporteur est destinée à faire circuler le fluide caloporteur de refroidissement du moteur du système propulsif du navire dans un premier échangeur thermique disposé dans le terminal gazier.

Une seconde interface d'alimentation en fluide caloporteur est destinée à faire circuler le fluide caloporteur de refroidissement au niveau des gaz d'échappement du moteur du système propulsif du navire dans un second échangeur thermique disposé dans le terminal gazier.

Selon un aspect particulier de l'invention, le navire comporte en outre une interface d'eau de ballastage permettant un transfert d'eau entre le navire et le terminal gazier.

Selon encore un autre aspect particulier de l'invention, le navire comporte en outre une interface de fourniture de puissance électrique permettant d'alimenter en électricité le terminal gazier.

L'invention vise aussi un terminal gazier comportant au moins un réservoir pour le stockage de gaz liquéfié et un moyen de transfert de ce gaz liquéfié entre ce réservoir et une cuve d'un navire de transport du gaz liquéfié, caractérisé en ce qu'il comporte en outre au moins une interface de réception d'un fluide caloporteur à partir du navire.

Selon un aspect particulier de l'invention, le terminal gazier comporte en outre une interface d'eau permettant un transfert d'eau entre le navire et le terminal gazier.

Selon encore un autre aspect particulier de l'invention, le terminal gazier comporte en outre une interface de réception de puissance électrique permettant d'alimenter en électricité le terminal gazier à partir du navire.

### Brève description des dessins

D'autres particularités et avantages du procédé et du dispositif selon l'invention ressortiront à la lecture de la description faite ci-après, à titre indicatif mais non limitatif, en référence aux dessins annexés sur lesquels :
- la figure 1 est une vue très schématique d'un circuit de déchargement du gaz liquéfié à partir d'un navire transportant ce gaz liquéfié vers un terminal gazier conforme à l'invention montrant que de l'énergie produite par le système propulsif du navire est fournie au terminal gazier;
- la figure 2 est une première variante de la figure 1 montrant que la chaleur produite par le système propulsif du navire peut être utilisée pour chauffer l'eau dans un bassin ;
- la figure 3 est une deuxième variante de la figure 1 comportant un cycle de récupération d'énergie ;
- la figure 4 est une troisième variante de la figure 1 comportant deux échangeurs thermiques ;
- la figure 5 est une variante de la figure 4 comportant deux cycles de récupération d'énergie ;
- la figure 6 est une vue très schématique d'un circuit de chargement du gaz liquéfié à partir d'un terminal gazier vers un navire transportant ce gaz liquéfié conforme à l'invention ;
- la figure 7 est une vue très schématique d'un circuit de déchargement du gaz liquéfié à partir d'un navire transportant ce gaz liquéfié vers un terminal gazier selon l'art antérieur ; et
- la figure 8 est une vue très schématique d'un circuit de chargement du gaz liquéfié à partir d'un terminal gazier vers un navire transportant ce gaz liquéfié selon l'art antérieur.

### Description détaillée de modes de réalisation

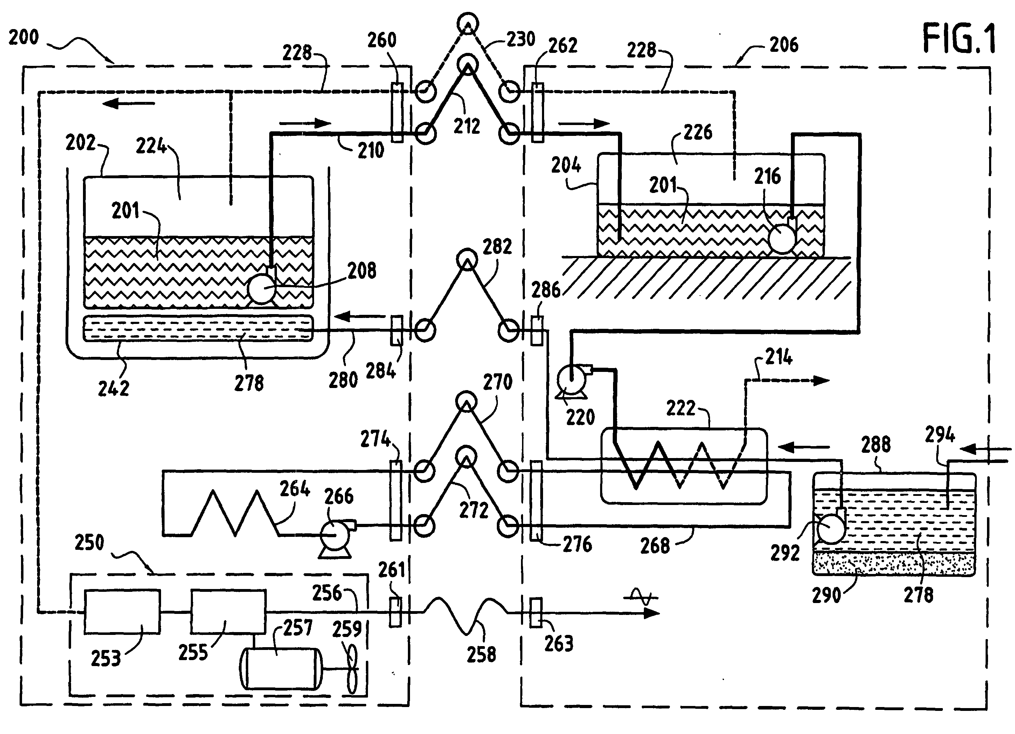

Conformément à l'invention, les figures 1 à 6 illustrent très schématiquement les circuits d'alimentation en énergie d'un terminal gazier 206 à partir d'un navire 200 transportant du gaz liquéfié 201 lors d'un transfert de ce gaz liquéfié 201 entre une cuve 202 du navire 200 et un réservoir 204 du terminal gazier 206.

En effet, le navire 200 comporte un système propulsif 250 qui produit de l'énergie et une partie déterminée de cette énergie est fournie au terminal gazier 206.

A titre d'exemple, le gaz liquéfié 201 peut être du gaz naturel liquéfié et dans ce cas, le navire est un navire méthanier et le terminal gazier est un terminal méthanier. Le gaz liquéfié 201 peut aussi être du gaz de pétrole liquéfié.

La figure 1 est une vue très schématique d'un circuit de déchargement du gaz liquéfié 201 à partir du navire 200 transportant ce gaz liquéfié vers le terminal gazier 206.

En effet, le gaz liquéfié 201 transporté dans la cuve 202 du navire 200 est déchargé vers un réservoir 204 du terminal gazier 206 par un moyen de transfert du gaz liquéfié.

Ce moyen de transfert comprend un circuit 210 de gaz liquéfié comportant un bras de chargement 212 et un autre circuit 228 de vapeurs de gaz comportant un autre bras de chargement 230. Les bras de chargement 212 et 230 permettent d'assurer une certaine liberté de mouvement entre le navire 200 et le terminal gazier 206 et sont connectés entre une interface 260 de transfert du gaz au niveau du navire 200 et une autre interface 262 de transfert du gaz du côté du terminal gazier 206.

Le moyen de transfert comporte aussi une pompe 208, qui peut être immergée dans la cuve 202 du navire 200 et qui débite le gaz liquéfié présente dans cette cuve 202 vers le réservoir 204 du terminal gazier 206.

En outre, le circuit 228 relie le ciel gazeux 224 de la cuve 202 au ciel gazeux 226 du réservoir 204 afin d'assurer le contrôle de pression des vapeurs dans les ciels gazeux 224 et 226.

Avantageusement, des excès de vapeurs de gaz dans le ciel gazeux 224 de la cuve 202 du navire 200 et le ciel gazeux 226 du réservoir 204 du terminal gazier 206 peuvent être utilisés pour alimenter le système propulsif 250 du navire 200 au travers du circuit 228.

En effet, selon cet exemple, le système propulsif 250 du navire 200 est basé sur l'utilisation d'un moteur 253 du type diesel ou de turbine à gaz qui peut être alimenté par des vapeurs de gaz pour entraîner un ou plusieurs alternateurs 255 alimentant un ou plusieurs moteurs électriques 257 entraînant une ou plusieurs hélices 259.

Le fait d'utiliser les vapeurs de gaz en excès provenant des entrées thermiques comme combustible pour alimenter la génération électrique du navire 200 lorsqu'il est en train de décharger, évite d'avoir à utiliser un compresseur 132 et un condenseur 118 pour les évacuer (voir figure 7 de l'art antérieur).

Suivant les besoins d'alimentation d'un gazoduc 214 alimenté en gaz à haute pression, le gaz liquéfié 201 contenu dans le réservoir 204 du terminal gazier 206 est transféré, par une pompe 216 immergé dans ce réservoir 204, vers une pompe 220 haute pression débitant ce gaz liquéfié 201 vers un échangeur thermique 222 afin qu'il soit re-gazéifié avant de l'envoyer, à une température sensiblement ambiante, vers le gazoduc 214.

En effet, la chaleur produite par le système propulsif 250 du navire 200 est utilisée pour alimenter en chaleur l'échangeur thermique 222 disposé dans le terminal gazier 206.

Le système propulsif 250 du navire 200 est alors utilisé comme une unité de co-génération fournissant au terminal gazier 206 un fluide caloporteur de chaleur.

La chaleur produite par le moteur 253 du type diesel ou turbine à gaz, peut être captée par un circuit de refroidissement 264 de ce moteur 253 pour alimenter à l'aide d'une pompe 266 un réseau 268 de fluide caloporteur, par exemple de l'eau pressurisée ou non, qui, via des bras ou des flexibles 270 et 272 alimente en fluide chaud l'échangeur 222 qui réalise la re-gazéification.

Les bras ou flexibles 270 et 272 sont reliés entre une interface d'alimentation 274 du fluide caloporteur au niveau du navire 200 et une interface de réception 276 du fluide caloporteur au niveau du terminal gazier 206.

Ainsi, l'interface d'alimentation 274 est destinée à faire circuler le fluide caloporteur de refroidissement du moteur 253 du système propulsif 250 du navire 200 dans l'échangeur thermique 222.

Par conséquent, on peut réduire, voire supprimer, le prélèvement d'eau de mer réchauffée par des brûleurs immergés 136 (voir figure 7 de l'art antérieur) dès qu'un navire se trouve connecté au terminal gazier.

Ce moyen de co-génération selon l'invention, permet d'optimiser les installations améliorant ainsi les performances économique et écologique, car l'investissement nécessaire est réalisé en grande partie au titre de la propulsion du navire lui-même et le terminal gazier n'a pas besoin d'avoir sa propre installation de co-génération.

Selon un autre aspect de l'invention, une partie déterminée de la puissance électrique fournie par le système propulsif 250 du navire 200 est utilisée pour alimenter en électricité le terminal gazier 206.

En effet, il est possible de valoriser, lors du déchargement, l'électricité produite par le ou les alternateurs 255 du navire 200 en les couplant via un circuit électrique 256 au réseau de puissance du terminal gazier 206. Le circuit électrique 256 comporte une connexion flexible 258 entre une interface 261 de fourniture de puissance électrique au niveau du navire 200 et une interface 263 de réception de puissance électrique au niveau du terminal gazier 206.

En général, la puissance électrique nécessaire à la propulsion du navire 200 est cinq à dix fois plus importante que celle nécessaire au chargement ou déchargement de sa cargaison, où ses principaux besoins sont ceux relatifs à l'alimentation en courant des pompes immergées 208, dont la consommation est très inférieure à celles des moteurs principaux 257 lorsque le navire 200 fait route.

Ainsi, des vapeurs de gaz en excès provenant des entrées thermiques sont directement converties en électricité qui est soit utilisée pour les besoins propres du navire 200, soit, via le circuit 256, pour les besoins du réseau électrique local, et en particulier celui des pompes haute pression 220 du terminal gazier 206.

En conséquence, le système propulsif 250 du navire 200 est utilisé comme une unité de co-génération fournissant au terminal gazier 206 non seulement une énergie calorifique mais aussi de la puissance électrique.

Selon encore un autre aspect de l'invention, lors d'un déchargement du gaz liquéfié 201 du navire 200 vers le terminal gazier 206, des ballasts 242 du navire sont remplis par de l'eau 278 fournie par le terminal gazier 206 et non pas par de l'eau de mer.

En effet, l'eau 278 est fournie par le terminal gazier 206 via un circuit d'alimentation 280 relié au navire 200 par un bras de chargement ou un flexible 282. Le bras de chargement est relié entre une interface d'eau de ballastage 284 au niveau du navire 200 et une interface d'eau 286 au niveau du terminal gazier 206. Ces interfaces d'eau 284 et 286 permettent le transfert d'eau 278 entre le terminal gazier 206 et le navire 200.

De plus, le circuit d'alimentation 280 peut être utilisé pour alimenter en chaleur l'échangeur thermique 222 afin de re-gazéifier le gaz liquéifié.

Ce dispositif permet d'utiliser pour le ballastage une eau de mer qui peut être au préalable décantée dans un bassin 288 où les limons 290 peuvent se déposer, permettant d'alimenter en eau propre 278 via une pompe 292 l'échangeur 222 puis les ballasts 242 du navire 200.

Alternativement, si les ressources correspondantes sont disponibles, cette eau 278 peut être de l'eau douce stockée dans le bassin 288 et alimentée par un circuit 294. En effet, la plupart des terminaux gaziers de déchargement sont dans des zones géographiques où les ressources en eau douce sont abondantes.

Ce remplacement de l'eau de mer par de l'eau de mer décantée ou de l'eau douce, présente plusieurs avantages.

Les dépôts de limons dans les ballasts 242 sont ainsi évités entraînant des économies importantes. A titre d'exemple, un navire peut collecter jusqu'à 1000 tonnes par an de limons dans ses ballasts.

De plus, l'utilisation de l'eau douce, réduit d'une part la corrosion dans les ballasts du navire, ce qui entraîne une réduction des coûts d'entretiens et permet d'autre part de charger sur le navire au niveau des terminaux gaziers de déchargement une eau qui a une valeur marchande. En effet, les terminaux de chargement qui appartiennent à des pays exportateurs de gaz naturel ou de pétrole liquéfié sont situés la plupart dans des régions arides ou désertiques.

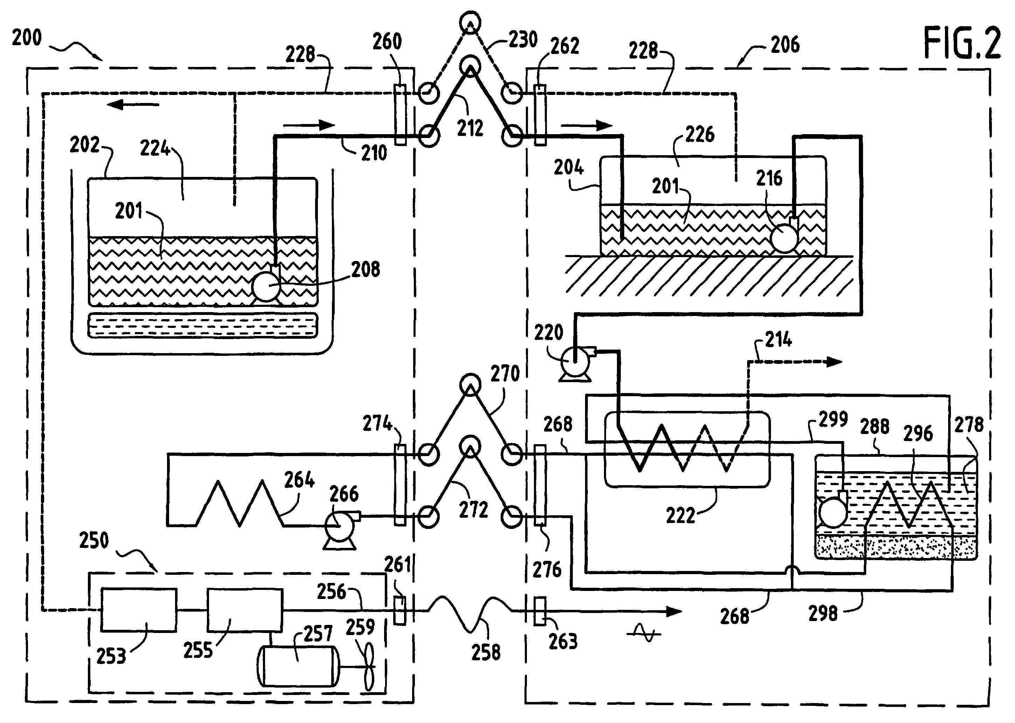

La figure 2, est une première variante montrant que la chaleur produite par le système propulsif 250 du navire 200 peut être utilisée pour chauffer l'eau 278 dans le bassin 288 afin que ce dernier puisse être utilisé comme un accumulateur thermique.

Ainsi, pour couvrir les besoins en eau chaude du terminal gazier 206 lorsque celui-ci doit émettre du gaz en l'absence de navire 200, le bassin 288 peut être utilisé comme accumulateur thermique pour alimenter l'échangeur thermique 222. L'eau contenue dans ce bassin 288 est ainsi réchauffée, lorsqu'un navire est connecté, par un échangeur 296 via un circuit 298 de fluide caloporteur relié au réseau 268.

L'échangeur 222 de re-gazéification peut être ainsi alimenté en eau chaude provenant soit du réseau 268 de fluide caloporteur venant du navire 200 lorsque celui-ci est en train de décharger, soit, lorsque le navire 200 n'est pas disponible pour fournir cette eau chaude, par le circuit 299 qui est alimentée par l'eau réchauffée stockée dans le bassin 288.

Cette architecture permet ainsi, en utilisant éventuellement une combinaison de ces deux sources d'eau chaude d'optimiser au mieux, en fonction des besoins du terminal gazier 206, l'utilisation des calories fournies par le navire 200 lors de son déchargement.

On pourra ainsi, par exemple, privilégier un stockage de l'eau chaude dans la journée en réduisant les émissions de gaz du terminal gazier 206 vers le gazoduc 214 lorsque l'énergie électrique nécessaire à l'alimentation des pompes haute pression 220 du terminal gazier 206 est la plus coûteuse, pour augmenter cette émission de gaz durant la nuit, où le coût de cette énergie électrique est moins élevé en assurant l'apport calorifique nécessaire pour la re-gazéification grâce à l'eau réchauffée stockée dans le bassin 288 durant la journée.

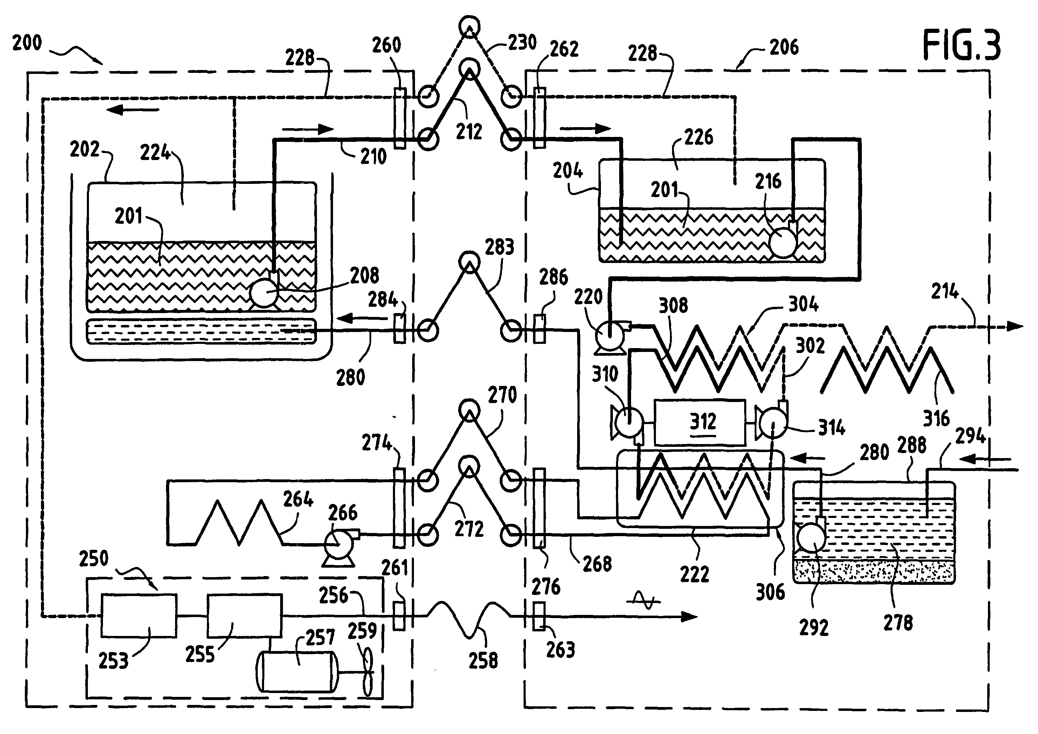

La figure 3, montre une deuxième variante permettant de valoriser, encore mieux, à l'aide d'un cycle positif de récupération d'énergie représenté par une boucle 302, les calories fournies par le navire 200.

Cette boucle 302 de récupération d'énergie est formé entre une source froide 304 au niveau de la re-gazéification du gaz liquéfié et une source chaude 306 au niveau de l'échangeur thermique 222. Ainsi, la source froide 304 est constituée par les frigories fournies par le gaz liquéfié lors de sa re-gazéification.

La boucle 302 de récupération d'énergie peut, par exemple être un cycle de Rankine où le fluide du cycle est liquéfié par les frigories fournies par le gaz liquéfié dans un échangeur/condenseur 308, puis mis sous pression par une pompe 310 qui peut par exemple être sur un même arbre qu'un alternateur 312 et qu'une turbine 314.

Le fluide de la boucle 302 est ensuite vaporisé sous pression dans l'échangeur 222 par le circuit de fluide caloporteur 268 venant du navire 200, puis détendue dans la turbine 314 avant de retourner dans le vaporisateur/condenseur 308.

L'énergie consommée par la pompe 310 étant inférieure à celle produite par la turbine 314, le cycle est positif, et de l'électricité peut être fournie par l'alternateur 312 au réseau local du terminal gazier.

Le rendement de cette boucle de récupération étant directement lié à la température des vapeurs de la boucle 302 à l'entrée de la turbine 314, il est avantageux que cette température soit maximale, c'est-à-dire le plus proche possible de la température d'échange maximale pouvant être fournie par le navire 200 qui peut être de l'ordre de 80°C dans le cas d'un circuit 264 de refroidissement de moteur Diesel 253.

Or, il peut être apporté des calories à l'échangeur 222 tout d'abord avec de l'eau 278 non réchauffée provenant, par exemple, du bassin 288 via le circuit d'eau de ballastage 280. Cette eau 278 non réchauffée permet ainsi de vaporiser puis porter le fluide de la boucle 302 à une température sensiblement ambiante. L'eau provenant du navire via le circuit 268 sert alors à surchauffer les vapeurs de la boucle 302 avant leur détente dans la turbine 314.

Par ailleurs, un échangeur thermique supplémentaire 316, alimentée en eau réchauffée ou non, peut être disposé à la sortie de la source froide 304 afin que la température du gaz après sa re-gazéification, soit suffisante pour permettre son injection directement dans le gazoduc 214. Cet échangeur thermique supplémentaire 316 peut par exemple être alimenté par la chaleur produite par le système propulsif 250 du navire 200 ou par le circuit d'alimentation 280 de l'eau de ballastage.

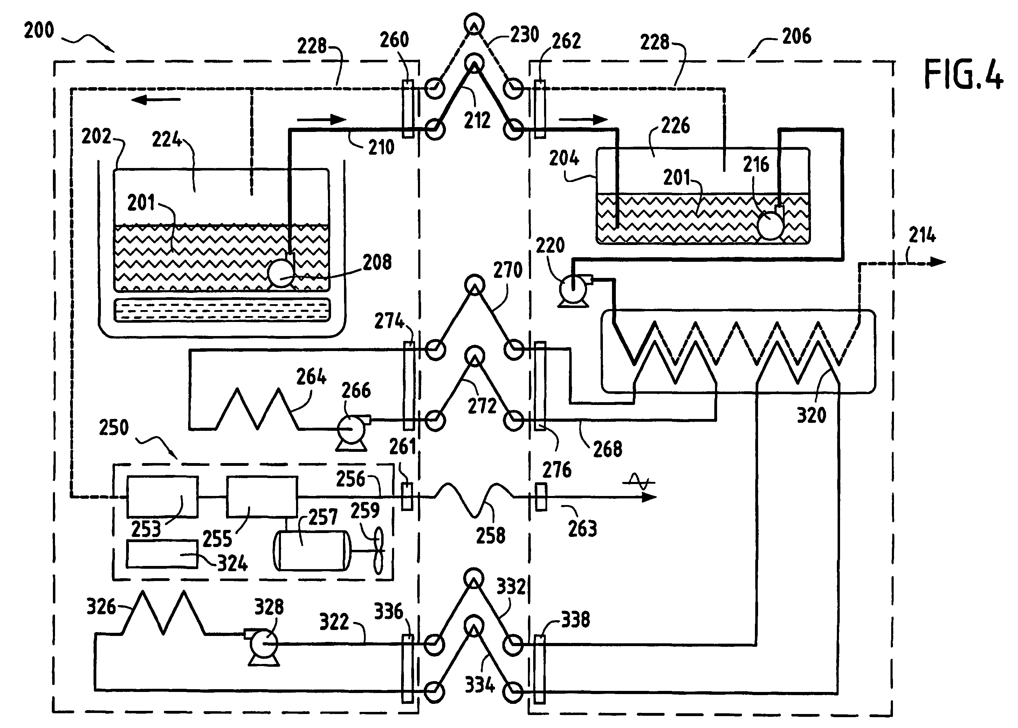

La figure 4 montre une autre variante comportant un autre échangeur thermique 320 alimenté à partir d'un circuit caloporteur 322. Cet échangeur thermique 320 peut par exemple correspondre à un deuxième étage de surchauffe, ajouté à l'échangeur thermique 222 de la figure 1.

En effet, la chaleur produite au niveau des gaz d'échappement 324 du moteur 253 du système propulsif 250 du navire 200, peut être captée par un circuit de refroidissement 326 pour alimenter à l'aide d'une pompe 328 le circuit 322 de fluide caloporteur.

Des bras ou flexibles 332 et 334 sont reliés entre une interface d'alimentation 336 du fluide caloporteur au niveau du navire 200 et une interface de réception 338 du fluide caloporteur au niveau du terminal gazier 206.

Les calories collectées au niveau des gaz d'échappement 324 peuvent augmenter la température du fluide caloporteur à une température de l'ordre de 150°C. Ainsi, le fluide caloporteur, peut être, par exemple de l'eau pressurisée, ou de la vapeur d'eau, voire de l'huile.

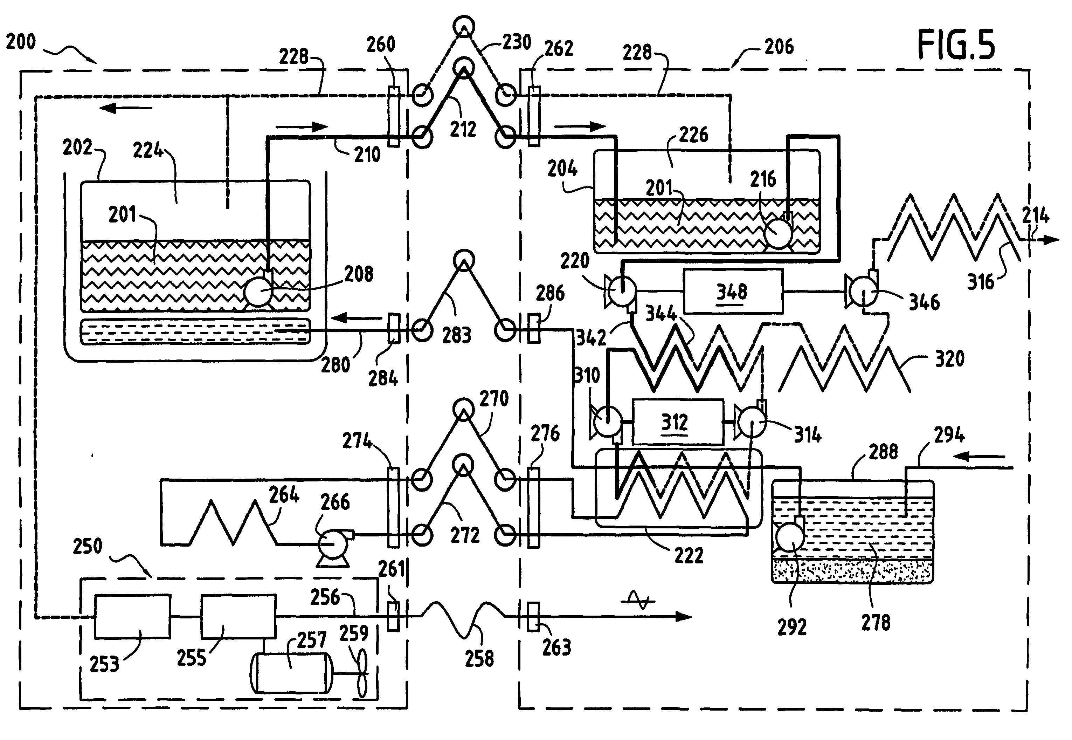

La figure 5 est une variante de la figure 3 comportant un autre circuit 342 de récupération d'énergie.

Cet exemple, permet d'améliorer encore la valorisation des frigories libérées par le gaz liquéfié durant son re-gazéification, en le portant, au moyen de la pompe 220, à une pression supérieure à celle requise par le gazoduc 214.

Une fois que le gaz liquéfié est re-gazéifié dans l'échangeur 344, il peut être surchauffé dans un autre échangeur, par exemple dans l'échangeur thermique 320 alimenté par la chaleur produite au niveau des gaz d'échappement comme illustré sur la figure 4.

Le gaz est ensuite détendu à la pression de service du gazoduc 214 dans une turbine 346 qui peut soit être couplée à un alternateur (non représenté) pour fournir de l'énergie au réseau, soit, comme cela est proposé dans la figure 5, peut être montée sur le même arbre que le moteur 348 de la pompe 220 de façon à en réduire la consommation électrique. Cette détente entraîne une chute de température, ainsi, le gaz peut être réchauffé à une température sensiblement ambiante par l'échangeur supplémentaire 316 avant d'être admis dans le gazoduc 214.

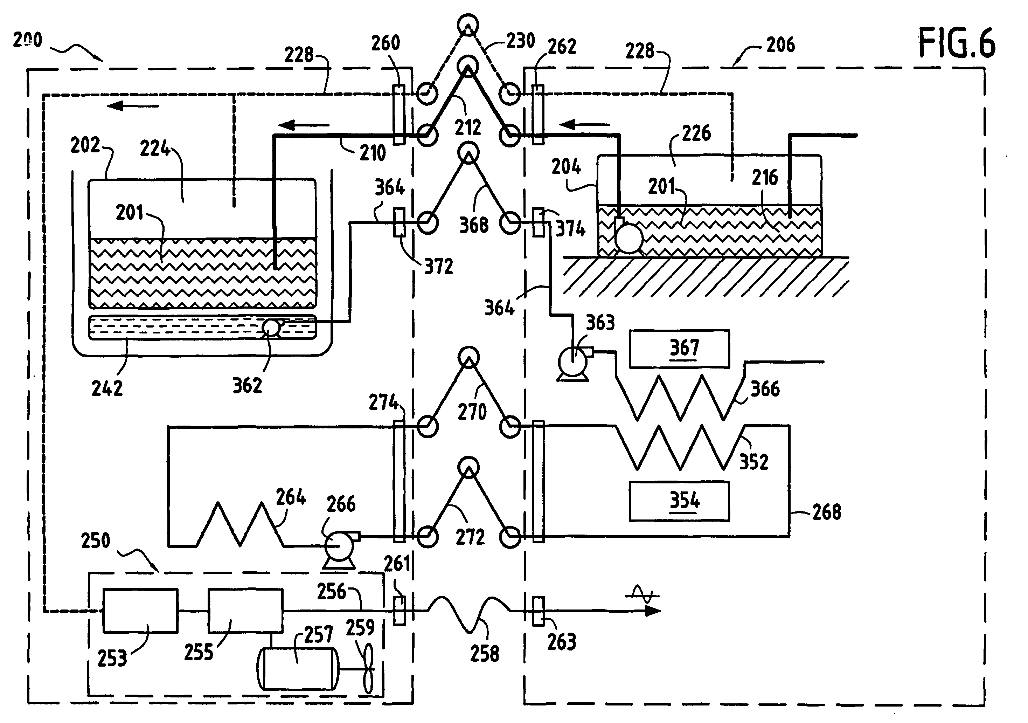

La figure 6 est une vue très schématique d'un circuit de chargement du gaz liquéfié à partir d'un terminal gazier 206 de chargement vers un navire 200 transportant ce gaz liquéfié.

Comme dans les figures précédentes, le système propulsif 250 du navire 200 est utilisé comme une unité de co-génération pour alimenter le terminal gazier 206 en chaleur et en électricité.

La chaleur transportée par le circuit 268 via les bras 270 et 272, est par exemple dégagée par un échangeur thermique 352 pour alimenter une installation 354 consommatrice de chaleur.

Les variantes présentées ci-dessus pour le stockage de cette chaleur ou l'utilisation de plusieurs fluides caloporteurs fournissant des calories à différentes températures sont évidemment envisageables à ce circuit de chargement.

De même, l'électricité produite par le ou les alternateurs 255 du navire 200 peut être utilisé pour alimenter via le circuit électrique 256 le réseau de puissance du terminal gazier 206.

En outre, selon cet exemple, au lieu de rejeter au fur et à mesure à la mer l'eau des ballasts 242 pour compenser le chargement de la cargaison, le navire 200 peut l'envoyer à l'aide d'une pompe 362 et éventuellement 363, au travers d'un circuit 364 d'eau vers le terminal gazier 206 où elle peut être utilisée comme fluide de refroidissement dans un échangeur thermique 366 au profit, par exemple d'un circuit de refroidissement 367 d'une usine ou installation de liquéfaction (non représenté).

Le circuit 364 d'eau comporte un bras ou un flexible de chargement 368 relié entre une interface d'eau de ballastage 372 au niveau du navire 200 et une interface d'eau 374 au niveau du terminal gazier 206.

Eventuellement, s'il s'agit d'eau douce, l'eau de ballastage peut être envoyée au travers des pompes supplémentaires intégrées dans le terminal, pour atteindre une plus grande pression vers un réseau local correspondant, à des fins, par exemple, d'irrigation.

Cette utilisation de l'eau de ballast soit comme fluide de refroidissement, soit comme source d'eau douce est particulièrement intéressante pour les terminaux gaziers de chargement qui sont placés dans des zones désertiques ou arides.

## Revendications

1. Procédé d'alimentation en énergie d'un terminal gazier (206) à partir d'un navire (200) transportant du gaz liquéfié lors d'un transfert de ce gaz liquéfié entre une cuve (202) du navire (200) et un réservoir (204) du terminal gazier (206), **caractérisé en ce qu'**une partie de l'énergie produite par le système propulsif (250) du navire (200) est fournie au terminal gazier (206).

2. Procédé selon la revendication 1, **caractérisé en ce que** des excès de vapeurs de gaz dans le ciel gazeux (224) de la cuve (202) du navire (200) et le ciel gazeux (226) du réservoir (204) du terminal gazier (206) sont utilisés pour alimenter le système propulsif (250) du navire (200).

3. Procédé selon l'une quelconque des revendications 1 et 2, **caractérisé en ce que** la chaleur produite par le système propulsif (250) du navire (200) est utilisée pour alimenter au moins un échangeur thermique (222, 296, 316, 320, 356) disposé dans le terminal gazier (206) pour alimenter ce dernier en chaleur.

4. Procédé selon la revendication 3, **caractérisé en ce qu'**un premier échangeur thermique (222) est alimenté à partir d'un circuit de refroidissement (264) du moteur (253) du système propulsif (250) du navire (200).

5. Procédé selon la revendication 3, **caractérisé en ce qu'**un second échangeur thermique (320) est alimenté à partir d'un circuit caloporteur (322) au niveau des gaz d'échappement (324) du moteur (253) du système propulsif (250) du navire (200).

6. Procédé selon l'une quelconque des revendications 1 à 5, **caractérisé en ce que** la chaleur dégagée par le premier échangeur thermique (222) ou/et le second échangeur thermique (320) est utilisée pour re-gazéifier le gaz liquéfié après avoir été déchargé de la cuve (202) du navire (200) vers le réservoir (204) du terminal gazier (206).

7. Procédé selon l'une quelconque des revendications 1 à 6, **caractérisé en ce qu'**au moins un cycle positif de récupération d'énergie (302) est formé entre une source froide (304) au niveau de la re-gazéification et une source chaude (306) au niveau du premier échangeur thermique (222) ou/et le second échangeur thermique (320).

8. Procédé selon l'une quelconque des revendications 6 et 7, **caractérisé en ce qu'**après sa re-gazéification, le gaz est réchauffé par un échangeur thermique supplémentaire (316).

9. Procédé selon l'une quelconque des revendications 1 à 8, **caractérisé en ce que** lors d'un déchargement du gaz liquéfié du navire (200) vers le terminal gazier (206), des ballasts (242) du navire (200) sont remplis par de l'eau (278) fournie par le terminal gazier (206).

10. Procédé selon la revendication 9, **caractérisé en ce que** l'eau fournie par le terminal gazier (206) est une eau de mer décantée dans un bassin (288).

11. Procédé selon la revendication 9, **caractérisé en ce que** l'eau fournie par le terminal gazier (206) est une eau douce stockée dans un bassin (288).

12. Procédé selon l'une quelconque des revendications 9 à 11, **caractérisé en ce que** l'eau fournie par le terminal gazier (206) est utilisée pour alimenter en chaleur l'échangeur thermique (222) afin de re-gazéifier le gaz liquéifié.

13. Procédé selon l'une quelconque des revendications 10 et 11, **caractérisé en ce que** la chaleur produite par le système propulsif (250) du navire (200) est utilisée pour chauffer l'eau dans le bassin (288) afin que ce dernier puisse être utilisé comme un accumulateur thermique.

14. Procédé selon la revendication 13, **caractérisé en ce que** l'accumulateur thermique formé par le bassin (288) d'eau est utilisé pour re-gazéifier le gaz liquéfié dans le terminal gazier (206).

15. Procédé selon l'une quelconque des revendications 1 à 8, **caractérisé en ce que** lors d'un chargement du gaz liquéfié du terminal gazier (206) vers le navire (200), l'eau présente dans les ballasts (242) du navire (200) est envoyée vers le terminal gazier (206).

16. Procédé selon la revendication 15, **caractérisé en ce que** l'eau envoyée vers le terminal gazier (206) est utilisée comme fluide de refroidissement dans un échangeur thermique (366) dans le terminal gazier (206).

17. Procédé selon la revendication 16, **caractérisé en ce que** l'échangeur thermique (366) est utilisé dans un circuit de refroidissement (367) d'une installation de liquéfaction.

18. Procédé selon l'une quelconque des revendications 1 à 17, **caractérisé en ce qu'**une partie déterminée de la puissance électrique fournie par le système propulsif (250) du navire (200) est utilisée pour alimenter en électricité le terminal gazier (206).

19. Procédé selon l'une quelconque des revendications 1 à 18, **caractérisé en ce que** le gaz liquéfié est du gaz naturel liquéfié.

20. Procédé selon l'une quelconque des revendications 1 à 18, **caractérisé en ce que** le gaz liquéfié est du gaz de pétrole liquéfié.

21. Navire comportant une cuve (202) pour le transport de gaz liquéfié, un système propulsif (250) et un moyen de transfert de ce gaz liquéfié entre la cuve (202) du navire (200) et un réservoir (204) d'un terminal gazier (206), **caractérisé en ce qu'**il comporte en outre au moins une interface (274) d'alimentation en fluide caloporteur destiné à alimenter le terminal gazier (206) en chaleur.

22. Navire selon la revendication 21, **caractérisé en ce qu'**une première interface (274) d'alimentation en fluide caloporteur est destinée à faire circuler le fluide caloporteur de refroidissement du moteur (253) du système propulsif (250) du navire (200) dans un premier échangeur thermique (222) disposé dans le terminal gazier (206).

23. Navire selon l'une quelconque des revendications 21 et 22, **caractérisé en ce qu'**une seconde interface (336) d'alimentation en fluide caloporteur est destinée à faire circuler le fluide caloporteur de refroidissement au niveau des gaz d'échappement (324) du moteur (253) du système propulsif (250) du navire (200) dans un second échangeur thermique (320) disposé dans le terminal gazier (206).

24. Navire selon l'une quelconque des revendications 21 à 23, **caractérisé en ce qu'**il comporte en outre une interface (284) d'eau de ballastage permettant un transfert d'eau entre le navire (200) et le terminal gazier (206).

25. Navire selon l'une quelconque des revendications 21 à 24, **caractérisé en ce qu'**il comporte en outre une interface (261) de fourniture de puissance électrique permettant d'alimenter en électricité le terminal gazier (206).

26. Terminal gazier comportant au moins un réservoir (204) pour le stockage de gaz liquéfié et un moyen de transfert de ce gaz liquéfié entre ce réservoir (204) et une cuve (202) d'un navire (200) de transport du gaz liquéfié, **caractérisé en ce qu'**il comporte en outre au moins une interface (276) de réception d'un fluide caloporteur à partir du navire (200).

27. Terminal gazier selon la revendication 26, **caractérisé en ce qu'**il comporte en outre une interface (286) d'eau permettant un transfert d'eau entre le navire (200) et le terminal gazier (206).

28. Terminal gazier selon l'une quelconque des revendications 26 et 27, **caractérisé en ce qu'**il comporte en outre une interface (263) de réception de puissance électrique permettant d'alimenter en électricité le terminal gazier (206) à partir du navire (200).

## Patentansprüche

1. Verfahren zur Energieversorgung eines Gasterminals (206) von einem Schiff (200) aus, das Flüssiggas transportiert bei einer Überführung dieses Flüssiggases zwischen einem Schiffstank (202) des Schiffes (200) und einem Tank (204) des Gasterminals (206), **dadurch gekennzeichnet, daß** ein Teil der durch der durch das Antriebssystem (250) des Schiffes (200) erzeugten Energie dem Gasterminal (206) geliefert wird.

2. Verfahren nach Anspruch 1, **dadurch gekennzeichnet, daß** Dampfüberschüsse von Gasen in der Gasdecke (224) des Schiffstanks (202) des Schiffs (200) und der Gasdecke (226) des Tanks (204) des Gasterminals (206) verwendet werden, um das Antriebssystem (250) des Schiffes (200) zu versorgen.

3. Verfahren nach einem der Ansprüche 1 und 2, **dadurch gekennzeichnet, daß** die durch das Antriebssystem (250) des Schiffes (200) erzeugte Wärme verwendet wird, um wenigstens einen Wärmetauscher (222, 296, 316, 320, 356) zu speisen, der in dem Gasterminal (206) angeordnet ist, um letzteren mit Wärme zu versorgen.

4. Verfahren nach Anspruch 3, **dadurch gekennzeichnet, daß** ein erster Wärmetauscher (222) gespeist wird aus einem Kühlkreislauf (264) des Motors (253) des Antriebssystems (250) des Schiffes (200).

5. Verfahren nach Anspruch 3, **dadurch gekennzeichnet, daß** ein zweiter Wärmetauscher (320) gespeist wird aus einem Wärmeübertragungskreislauf (322) auf der Ebene der Auspuffgase (324) des Motors (253) des Antriebssystems (250) des Schiffes (200).

6. Verfahren nach einem der Ansprüche 1 bis 5, **dadurch gekennzeichnet, daß** die durch den ersten Wärmetauscher (222) und/oder den zweiten Wärmetauscher (320) freigesetzte Wärme verwendet wird, um Flüssiggas wieder zu vergasen, nachdem es aus dem Schiffstank (202) des Schiffes (200) zu dem Tank (204) des Gasterminals (206) entladen worden ist.

7. Verfahren nach einem der Ansprüche 1 bis 6, **dadurch gekennzeichnet, daß** wenigstens ein positiver Energiegewinnungszyklus (302) zwischen einer Kältequelle (304) auf der Ebene der erneuten Vergasung und einer Wärmequell (306) auf der Ebene des ersten Wärmetauschers (222) und/oder des zweiten Wärmetauschers (320) gebildet wird.

8. Verfahren nach einem der Ansprüche 6 und 7, **dadurch gekennzeichnet, daß** nach seiner erneuten Vergasung das Gas durch einen zusätzlichen Wärmetauscher (316) erwärmt wird.

9. Verfahren nach einem der Ansprüche 1 bis 8, **dadurch gekennzeichnet, daß** bei einer Entladung des Flüssiggases von dem Schiff (200) zum Gasterminal (206), Ballaste (242) des Schiffes (200) durch Wasser (278) gefüllt werden, das durch den Gasterminal (206) geliefert wird.

10. Verfahren nach Anspruch 9, **dadurch gekennzeichnet, daß** das durch den Gasterminal (206) gelieferte Wasser in ein Bassin (288) übergegossenes Meerwasser ist.

11. Verfahren nach Anspruch 9, **dadurch gekennzeichnet, daß** das durch den Gasterminal (206) gelieferte Wasser in einem Bassin (288) gelagertes Süßwasser ist.

12. Verfahren nach einem der Ansprüche 9 bis11, **dadurch gekennzeichnet, daß** das durch den Gasterminal (206) gelieferte Wasser verwendet wird, um dem Wärmetauscher (222) mit Wärme zu versorgen, um das verflüssigte Gas wieder zu vergasen.

13. Verfahren nach einem der Ansprüche 10 und 11, **dadurch gekennzeichnet, daß** die durch das Antriebssystem (250) des Schiffes (200) erzeugte Wärme verwendet wird, um das Wasser in dem Bassin (288) zu heizen, damit letzteres als Wärmeakkumulator verwendet werden kann.

14. Verfahren nach Anspruch 13, **dadurch gekennzeichnet, daß** der durch das Wasserbassin (288) gebildete Wärmeakkumulator verwendet wird, um das Flüssiggas in dem Gasterminal (206) wieder zu vergasen.

15. Verfahren nach einem der Ansprüche 1 bis 8, **dadurch gekennzeichnet, daß** bei einem Laden des Flüssiggases aus dem Gasterminal (206) zum Schiff (200), das in den Ballasten (242) des Schiffes (200) vorliegende Wasser zum Gasterminal (206) geschickt wird.

16. Verfahren nach Anspruch 15, **dadurch gekennzeichnet, daß** das zum Gasterminal (206) geschickte Wasser als Kühlfluid in einem Wärmetauscher (366) in dem Gasterminal (206) verwendet wird.

17. Verfahren nach Anspruch 16, **dadurch gekennzeichnet, daß** der Wärmetauscher (366) in einem Kühlkreislauf (367) einer Verflüssigungsanlage verwendet wird.

18. Verfahren nach einem der Ansprüche 1 bis 17, **dadurch gekennzeichnet, daß** ein bestimmter Teil der durch das Antriebssystem (250) des Schiffes (200) gelieferten elektrischen Leistung verwendet wird, um den Gasterminal (206) mit Elektrizität zu versorgen.

19. Verfahren nach einem der Ansprüche 1 bis 18, **dadurch gekennzeichnet, daß** das Flüssiggas verflüssigtes Erdgas ist.

20. Verfahren nach einem der Ansprüche 1 bis 18, **dadurch gekennzeichnet, daß** das Flüssiggas verflüssigtes Erdölgas ist.

21. Schiff, das einen Schiffstank (202) für den Transport von Flüssiggas, ein Antriebssystem (250) und ein Mittel zur Überführung dieses Flüssiggases zwischen dem Schiffstank (202) des Schiffes (200) und einem Tank (204) eines Gasterminals (206) umfasst, **dadurch gekennzeichnet, daß** es außerdem wenigstens eine Schnittstelle (274) zur Versorgung mit Wärmeübertragungsfluid umfasst, die dazu vorgesehen ist, den Gasterminal (206) mit Wärme zu versorgen.

22. Schiff nach Anspruch 21, **dadurch gekennzeichnet, daß** eine erste Schnittstelle (274) zur Versorgung mit Wärmeübertragungsfluid dazu vorgesehen ist, das Wärmeübertragungsfluid zum Kühlen des Motors (253) des Antriebssystems (250) des Schiffes (200) in einem ersten Wärmetauscher (222) zirkulieren zu lassen, der in dem Gasterminal (206) angeordnet ist.

23. Schiff nach einem der Ansprüche 21 und 22, **dadurch gekennzeichnet, daß** eine zweite Schnittstelle (336) zur Versorgung mit Wärmeübertragungsfluid dazu vorgesehen ist, das Wärmeübertragungsfluid zu Kühlen auf der Ebene der Auspuffgase (324) des Motors (253) des Antriebssystems (250) des Schiffes (200) in einem zweiten Wärmetauscher (320) zirkulieren zu lassen, der in dem Gasterminal (206) angeordnet ist.

24. Schiff nach einem der Ansprüche 21 bis 23, **dadurch gekennzeichnet, daß** es außerdem eine Ballastwasserschnittstelle (284) umfasst, die eine Wasserüberführung zwischen dem Schiff (200) und dem Gasterminal (206) ermöglicht.

25. Schiff nach einem der Ansprüche 21 bis 24, **dadurch gekennzeichnet, daß** es außerdem eine Schnittstelle (261) zur Abgabe elektrischer Leistung umfasst, die es ermöglicht, den Gasterminal (206) mit Elektrizität zu versorgen.

26. Gasterminal, der wenigstens einen Tank (204) zum Lagern des Flüssiggases und ein Mittel zur Überführung dieses Flüssiggases zwischen diesem Tank (204) und einem Schiffstank (202) eines Schiffes (200) zum Transport von Flüssiggas umfasst, **dadurch gekennzeichnet, daß** er außerdem wenigstens eine Schnittstelle (276) zur Aufnahme von Wärmeübertragungsfluid aus dem Schiff (200) umfasst.

27. Gasterminal nach Anspruch 26, **dadurch gekennzeichnet, daß** er außerdem eine Wasserschnittstelle (286) umfasst, die eine Wasserüberführung zwischen dem Schiff (200) und dem Gasterminal (206) ermöglicht.

28. Gasterminal nach einem der Ansprüche 26 und 27, **dadurch gekennzeichnet, daß** er außerdem eine Schnittstelle (263) zur Aufnahme elektrischer Leistung umfasst, die es ermöglicht, den Gasterminal (206) aus dem Schiff (200) mit Elektrizität zu versorgen.

## Claims

1. A method of feeding energy to a gas terminal (206) from a ship (200) transporting liquefied gas while said liquefied gas is being transferred between a tank (202) of the ship (200) and a tank (204) of the gas terminal (206), the method being **characterised in that** a portion of the energy produced by the propulsion system (250) of the ship (200) is supplied to the gas terminal (206).

2. A method according to claim 1, **characterised in that** excess gas vapor in the gas ceiling (224) of the tank (202) of the ship (200) and in the gas ceiling (226) of the tank (204) of the gas terminal (206) is used for feeding the propulsion system (250) of the ship (200).

3. A method according to claim 1 or claim 2, **characterised in that** the heat produced by the propulsion system (250) of the ship (200) is used for feeding heat to at least one heat exchanger (222, 296, 316, 320, 356) disposed in the gas terminal (206).

4. A method according to claim 3, **characterised in that** a first heat exchanger (222) is fed from a cooling circuit (264) of the engine (253) of the propulsion system (250) of the ship (200).

5. A method according to claim 3, **characterised in that** a second heat exchanger (320) is fed from a heat transfer circuit (322) for taking heat from the exhaust gas (324) of the engine (253) of the propulsion system (250) of the ship (200).

6. A method according to any one of claims 1 to 5, **characterised in that** the heat given off by the first heat exchanger (222) and/or by the second heat exchanger (320) is used to re-gasify the liquefied gas after it has been unloaded from the tank (202) of the ship (200) to the tank (204) of the gas terminal (206).

7. A method according to any one of claims 1 to 6, **characterised in that** at least one positive energy recovery cycle (302) is formed between a cold source (304) associated with the re-gasification and a hot source (306) associated with the first heat exchanger (222) and/or with the second heat exchanger (320).

8. A method according to claim 6 or claim 7, **characterised in that** after being re-gasified, the gas is heated by an additional heat exchanger (316).

9. A method according to any one of claims 1 to 8, **characterised in that** while liquefied gas is being unloaded from the ship (200) to the gas terminal (206), ballast tanks (242) of the ship (200) are filled with water (278) supplied by the gas terminal (206).

10. A method according to claim 9, **characterised in that** the water supplied by the gas terminal (206) is sea water that has settled in a basin (288).

11. A method according to claim 9, **characterised in that** the water supplied by the gas terminal (206) is fresh water stored in a basin (288).

12. A method according to any one of claims 9 to 11, **characterised in that** the water supplied by the gas terminal (206) is used for feeding the heat exchanger (222) with heat for the purpose of re-gasifying the liquefied gas.

13. A method according to claim 10 or claim 11, **characterised in that** the heat produced by the propulsion system (250) of the ship (200) is used for heating the water in the basin (288) so that the basin can be used to store heat.

14. A method according to claim 13, **characterised in that** the heat stored in the water basin (288) is used in the gas terminal (206) to re-gasify the liquefied gas.

15. A method according to any one of claims 1 to 8, **characterised in that** while liquefied gas is being loaded from the gas terminal (206) onto the ship (200), the water present in the ballast tanks (242) of the ship (200) is delivered to the gas terminal (206).

16. A method according to claim 15, **characterised in that** the water delivered to the gas terminal (206) is used as a cooling fluid in a heat exchanger (366) in the gas terminal (206).

17. A method according to claim 16, **characterised in that** the heat exchanger (366) is used in a cooling circuit (367) of a liquefaction installation.

18. A method according to any one of claims 1 to 17, **characterised in that** a determined portion of the electrical power supplied by the propulsion system (250) of the ship (200) is used for feeding electricity to the gas terminal (206).

19. A method according to any one of claims 1 to 18, **characterised in that** the liquefied gas is liquefied natural gas.

20. A method according to any one of claims 1 to 18, **characterised in that** the liquefied gas is liquefied petroleum gas.

21. A ship including a tank (202) for transporting liquefied gas, a propulsion system (250), and means for transferring the liquefied gas between the tank (202) of the ship (200) and a tank (204) of a gas terminal (206), the ship being **characterised in that** it further comprises at least one interface (274) for feeding a heat transfer fluid to supply heat to the gas terminal (206).

22. A ship according to claim 21, **characterised in that** a first heat transfer fluid feed interface (274) is used to cause the cooling heat transfer fluid of the engine (253) of the ship's propulsion system (250) to circulate through a first heat exchanger (222) disposed in the gas terminal (206).

23. A ship according to claim 21 or claim 22, **characterised in that** a second heat transfer fluid feed interface (336) serves to cause the cooling heat transfer fluid for cooling the exhaust gases (324) from the engine (253) of the ship's propulsion system (250) to circulate through a second heat exchanger (320) disposed in the gas terminal (206).

24. A ship according to any one of claims 21 to 23, **characterised in that** it further comprises a ballast water interface (284) enabling water to be transferred between the ship (200) and the gas terminal (206).

25. A ship according to any one of claims 21 to 24, **characterised in that** it further comprises an interface (261) for supplying electrical power that enables the gas terminal (206) to be fed with electricity.

26. A gas terminal comprising at least one tank (204) for storing liquefied gas and transfer means for transferring the liquefied gas between said tank (204) and a tank (202) of a ship (200) for transporting liquefied gas, the terminal being **characterised in that** it further comprises at least one interface (276) for receiving a heat transfer fluid from the ship (200).

27. A gas terminal according to claim 26, **characterised in that** it further comprises a water interface (286) enabling water to be transferred between the ship (200) and the gas terminal (206).

28. A gas terminal according to claim 26 or claim 27, **characterised in that** it further comprises an interface (263) for receiving electrical power enabling the gas terminal (206) to be fed with electricity from the ship (200).
